# EUROPÄISCHE PATENTSCHRIFT

(11) **EP 3 776 117 B1**
(45) Veröffentlichungstag und Bekanntmachung des Hinweises auf die Patenterteilung: **03.12.2025**
(21) Anmeldenummer: 19727859.1
(22) Anmeldetag: 15.05.2019
(51) Int. Cl.: G05B 23/02

(54) **UMFASSENDE STÖRUNGSANALYSE VON STEUEREINRICHTUNGEN UND INDUSTRIELLEN TECHNISCHEN ANLAGEN**
COMPREHENSIVE FAULT ANALYSIS FOR CONTROL DEVICES AND INDUSTRIAL TECHNICAL INSTALLATIONS
ANALYSE COMPLÈTE DE PERTURBATIONS DE DISPOSITIFS DE COMMANDE ET D'INSTALLATIONS TECHNIQUES INDUSTRIELLES

(30) Priorität: 12.06.2018 EP 18177172
(43) Veröffentlichungstag der Anmeldung: 17.02.2021
(73) Patentinhaber: Siemens Aktiengesellschaft, 80333 München (DE)
(72) Erfinder: HEGMANN, Michael, 91126 Schwabach (DE)
(74) Vertreter: Siemens Patent Attorneys
(86) Internationale Anmeldenummer: PCT/EP2019/062454
(87) Internationale Veröffentlichungsnummer: WO 2019/238346

(56) Entgegenhaltungen:
- DE-A1- 102005 025 520
- DE-A1- 102006 056 879
- US-A1- 2003 046 382
- US-A1- 2005 060 323
- US-A1- 2009 062 933
- US-A1- 2016 091 397

## Beschreibung

Die vorliegende Erfindung geht aus von einem Betriebsverfahren für eine Steuereinrichtung zur Steuerung einer industriellen technischen Anlage, wobei die Steuereinrichtung Maschinencode eines Computerprogramms abarbeitet, wobei die Abarbeitung des Maschinencodes durch die Steuereinrichtung bewirkt, dass die Steuereinrichtung
- in einem Normalbetrieb zyklisch von Sensoren der Anlage Istgrößen der Anlage entgegennimmt, unter Verwertung der Istgrößen der Anlage und von Sollgrößen der Anlage Steuergrößen für Aktoren der Anlage ermittelt und die Steuergrößen an die Aktoren ausgibt,
- im Normalbetrieb zumindest für einen begrenzten Zeitraum zumindest für einen Teil der Istgrößen deren jeweilige Historie speichert und
- im Normalbetrieb die Istgrößen auf Auftreten einer Störung überwacht,
- beim Auftreten einer Störung eine die Störung identifizierende Störungsmeldung und zumindest für einen Teil der Istgrößen, deren jeweilige Historie die Steuereinrichtung speichert, die jeweilige Historie an eine automatisiert betriebene Wissensbasis übermittelt,
- in Reaktion auf die Übermittlung der Störungsmeldung und der übermittelten Historien von der Wissensbasis eine Antwort entgegennimmt,
- die Antwort über eine Anzeigeeinrichtung an eine Bedienperson der Steuereinrichtung ausgibt,
- vor der Ausführung des Normalbetriebs von der Bedienperson Vorgaben entgegennimmt und dass die Steuereinrichtung in Abhängigkeit von den Vorgaben bestimmt, welche Historien sie ermittelt.

Die vorliegende Erfindung geht weiterhin aus von einem Computerprogramm zur Ausführung eines derartigen Betriebsverfahrens.

Die vorliegende Erfindung geht weiterhin aus von einer Steuereinrichtung für eine industrielle technische Anlage, wobei die Steuereinrichtung mit einem derartigen Computerprogramm programmiert ist, so dass die Steuereinrichtung ein derartiges Betriebsverfahren ausführt.

Während des kompletten Lebenszyklus von industriellen technischen Anlagen - angefangen von kleinen Anlagen wie beispielsweise einem elektrischen Antrieb bis zu Großanlagen wie beispielsweise einer Chemieanlage oder einer Anlage der Grundstoffindustrie oder eine Anlage zur Herstellung von Papier oder Zement - können Störungen auftreten. Derartige Störungen können - je nach Störung - mit Einschränkungen im Betrieb der industriellen technischen Anlage oder einem Stillstand der industriellen technischen Anlage verbunden sein. Man ist daher bestrebt, derartige Störungen nach ihrem Auftreten möglichst schnell und möglichst vollständig zu beheben. Zu diesem Zweck ist es in der Regel erforderlich, die Störung so genau wie möglich zu beschreiben. Je genauer die Beschreibung der Störung, desto präziser können die Maßnahmen zur Behebung der Störung bestimmt werden.

Im Stand der Technik werden dem Betreiber der industriellen technischen Anlage in der Regel über eine Anzeigeeinrichtung generisch formulierte Störungsmeldungen mit einem entsprechenden Störungscode, gegebenenfalls ergänzt mit Begleitwerten angezeigt. Diese Meldungen vermitteln dem Betreiber der industriellen technischen Anlage, je nach Lage des Einzelfalls, keine, eine oder mehrere Möglichkeiten zur Behebung der Störung.

Es ist weiterhin bekannt, im Falle einer Störung zusätzlich auch noch Messwerte einiger weniger wichtiger Signale aufzuzeichnen, die unmittelbar vor dem Auftreten der Störung angefallen sind. Manchmal ist es auch möglich, eine Historie derartiger Signale aufzuzeichnen. Die Störungen und die Signale können sodann einer Bedienperson für die industrielle technische Anlage über eine Anzeigeeinrichtung angezeigt werden.

Allen Maßnahmen des Standes der Technik ist gemeinsam, dass nur eine Anzeige der Störung erfolgt, jedoch keine über die Anzeige der Störung als solche hinausgehende Maßnahmen zur Behebung der Störung vorgeschlagen werden.

Aus der US 2016/0 091 397 A1 ist ein Betriebsverfahren für eine Steuereinrichtung zur Steuerung einer industriellen technischen Anlage bekannt, wobei die Steuereinrichtung in einem Normalbetrieb zyklisch von Sensoren der Anlage Istgrößen der Anlage entgegennimmt, unter Verwertung der Istgrößen der Anlage und von Sollgrößen der Anlage Steuergrößen für Aktoren der Anlage ermittelt und die Steuergrößen an die Aktoren ausgibt, wobei die Steuereinrichtung im Normalbetrieb die Istgrößen auf Auftreten einer Störung überwacht. Weiterhin nimmt die Steuereinrichtung in Reaktion auf einen aufgetretenen Fehler von der Wissensbasis eine Antwort entgegen. Die Steuereinrichtung kann die Antwort über eine Anzeigeeinrichtung an eine Bedienperson der Steuereinrichtung ausgeben.

Aus der US 2009/0 062 933 A1 ist ein Betriebsverfahren für eine Steuereinrichtung zur Steuerung einer industriellen technischen Anlage bekannt, wobei die Steuereinrichtung in einem Normalbetrieb zyklisch von Sensoren der Anlage Istgrößen der Anlage entgegennimmt, unter Verwertung der Istgrößen der Anlage und von Sollgrößen der Anlage Steuergrößen für Aktoren der Anlage ermittelt und die Steuergrößen an die Aktoren ausgibt, wobei die Steuereinrichtung im Normalbetrieb zumindest für einen begrenzten Zeitraum eine Historie zumindest eines Teils der Istgrößen speichert, wobei die Steuereinrichtung im Normalbetrieb die Istgrößen auf Auftreten einer Störung überwacht, wobei die Steuereinrichtung beim Auftreten einer Störung eine die Störung identifizierende Störungsmeldung und zumindest für einen Teil der Istgrößen, deren Historie die Steuereinrichtung speichert, die Historie an eine automatisiert betriebene Wissensbasis übermittelt.

Aus der DE 10 2005 025 520 A1 ist ein Betriebsverfahren für eine Steuereinrichtung zur Steuerung einer industriellen technischen Anlage bekannt, wobei die Steuereinrichtung in einem Normalbetrieb zyklisch von Sensoren der Anlage Istgrößen der Anlage entgegennimmt, unter Verwertung der Istgrößen der Anlage und von Sollgrößen der Anlage Steuergrößen für Aktoren der Anlage ermittelt und die Steuergrößen an die Aktoren ausgibt, wobei die Steuereinrichtung im Normalbetrieb für einen begrenzten Zeitraum temporär eine Historie der Istgrößen speichert, wobei die Steuereinrichtung im Normalbetrieb die Istgrößen auf Auftreten einer Störung überwacht, wobei die Steuereinrichtung beim Auftreten einer Störung die temporär gespeicherte Historie der Istgrößen in einen Permanent-Speicher übernimmt. Von dort werden sie zu einem späteren Zeitpunkt von einem Diagnosegerät ausgelesen.

Die Aufgabe der vorliegenden Erfindung besteht darin, verbesserte Möglichkeiten zu schaffen, mittels derer dem Betreiber der industriellen technischen Anlage zusätzlich zur Störungsmeldung als solcher auch Hinweise zur Behebung der Störung gegeben werden können.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 9.

Erfindungsgemäß wird ein Betriebsverfahren der eingangs genannten Art dadurch ausgestaltet, dass die Abarbeitung des Maschinencodes durch die Steuereinrichtung bewirkt, dass die Steuereinrichtung
- beim Auftreten einer Störung eine die Störung identifizierende Störungsmeldung und zumindest für einen Teil der Istgrößen, deren jeweilige Historie die Steuereinrichtung speichert, die jeweilige Historie an eine automatisiert betriebene Wissensbasis übermittelt,
- in Reaktion auf die Übermittlung der Störungsmeldung und der übermittelten Historien von der Wissensbasis eine Antwort entgegennimmt,
- die Antwort über eine Anzeigeeinrichtung an eine Bedienperson der Steuereinrichtung ausgibt, und
- vor der Ausführung des Normalbetriebs von der Bedienperson Vorgaben entgegennimmt und im Normalbetrieb in Abhängigkeit von den Vorgaben bestimmt, welche Historien sie ermittelt,
   wobei die Abarbeitung des Maschinencodes (4) durch die Steuereinrichtung (2) bewirkt, dass
- die Steuereinrichtung (2) in Abhängigkeit von der aufgetretenen Störung bestimmt, welche Historien sie an die Wissensbasis (7) übermittelt,
- im Normalbetrieb für den begrenzten Zeitraum zusätzlich zu den Historien für zumindest einen Teil der Istgrößen auch für zumindest einen Teil der Sollgrößen und/oder für zumindest einen Teil der Steuergrößen eine jeweilige Historie speichert und
- beim Auftreten der Störung zusätzlich zur Störungsmeldung und zu den übermittelten Historien der Istgrößen auch zumindest für einen Teil der Sollgrößen und/oder Steuergrößen, deren jeweilige Historie die Steuereinrichtung speichert, die jeweilige Historie an die Wissensbasis übermittelt.

Durch diese Vorgehensweise ist es möglich, der Bedienperson der Steuereinrichtung mittels der Antwort gezielte Hinweise zur Behebung der Störung zu geben, wobei gleichzeitig auf einfache und effiziente Weise durch die Bedienperson festgelegt werden kann, welche Informationen erfasst werden und welche Informationen im Falle einer Störung an die Wissensbasis übermittelt werden. Zudem werden der Wissensbasis mehr Informationen zur Verfügung gestellt, so dass die Wissensbasis ihre Antwort präziser auf die aufgetretene Störung "maßschneidern" kann.

Vorzugsweise bewirkt die Abarbeitung des Maschinencodes durch die Steuereinrichtung, dass die Steuereinrichtung beim Auftreten einer Störung zusätzlich zur Störungsmeldung und den übermittelten Historien weitere Informationen an die Wissensbasis übermittelt. Dadurch ist ein noch weiter verbessertes "Maßschneidern" der Antwort durch die Wissensbasis möglich.

Die weiteren Informationen können insbesondere mindestens einen der nachfolgenden Sachverhalte umfassen:
- Identifizierungsdaten zur eindeutigen Identifizierung der Steuereinrichtung und/oder der Anlage,
- Informationen über die Hardware der Steuereinrichtung und/oder der Anlage,
- Informationen über die Firmware der Steuereinrichtung und/oder der Anlage,
- Informationen über die Software der Steuereinrichtung,
- Kommunikationseinstellungen der Steuereinrichtung,
- Einstellungen von Steuerungsparametern der Steuereinrichtung,
- Informationen über den Zustand der Umgebung der Steuereinrichtung und/oder der Anlage,
- Informationen über an Elementen der Anlage aufgetretenen Verschleiß,
- eine Konfiguration der Anlage.

Vorzugsweise bewirkt die Abarbeitung des Maschinencodes durch die Steuereinrichtung, dass die Steuereinrichtung in Reaktion auf die über die Anzeigeeinrichtung an die Bedienperson ausgegebene Antwort von der Bedienperson Ergänzungsinformationen entgegennimmt und die Ergänzungsinformationen an die Wissensbasis weiterleitet. Dadurch kann die Wissensbasis ihr zukünftiges Verhalten optimieren.

Die Optimierung des zukünftigen Verhaltens der Wissensbasis ist besonders effizient, wenn die Ergänzungsinformationen eine Auswahl einer von mehreren in der Antwort enthaltenen Teilantworten, eine Bewertung der Antwort und/oder Freitext enthalten. Die Auswahl einer Teilantwort kann beispielsweise bedeuten, dass die Antwort mehrere mögliche Maßnahmen zur Behebung der Störung enthalten hat und die Bedienperson markiert, welche Maßnahmen sie ergriffen hat oder welche Maßnahme tatsächlich zum Erfolg geführt hat. Die Bewertung der Antwort kann beispielsweise eine Bewertung auf einer Skala von 0 oder 1 ("sehr schlecht") bis 5 oder 10 ("ausgezeichnet") sein.

Die Steuereinrichtung kann aufgrund der Abarbeitung des Maschinencodes beim Auftreten einer Störung den Normalbetrieb, in dem sie zyklisch von den Sensoren der Anlage die Istgrößen der Anlage entgegennimmt, unter Verwertung der Istgrößen der Anlage und der Sollgrößen der Anlage die Steuergrößen für die Aktoren der Anlage ermittelt und die Steuergrößen an die Aktoren ausgibt, entweder trotz der Störung beibehalten oder aufgrund der Störung beenden. Welche dieser beiden Maßnahmen ergriffen wird, kann von der Störung abhängig sein.

Die Wissensbasis kann innerhalb der Steuereinrichtung gespeichert sein. Alternativ kann die Wissensbasis in einem von der Steuereinrichtung verschiedenen Rechner gespeichert sein. In diesem Fall ist der Rechner über ein Rechnernetz mit der Steuereinrichtung verbunden.

In einer besonders fortschrittlichen Ausgestaltung des Betriebsverfahrens ist es möglich, dass die Steuereinrichtung aufgrund der Abarbeitung des Maschinencodes anhand der Antwort selbsttätig Maßnahmen zum Beheben der Störung ermittelt. Insbesondere kann die Antwort mehrere mögliche Maßnahmen zum Beheben der Störung und zusätzlich Bedingungen enthalten, unter welchen Umständen welche Maßnahme im Sinne eines Beheben der Störung zielführend sind. In diesem Fall kann die Steuereinrichtung aufgrund der Abarbeitung des Maschinencodes beispielsweise weitere erfasste, aber nicht an die Wissensbasis übermittelte Historien auswerten und je nach Auswertung die eine oder die andere vorgeschlagene Maßnahme ermitteln.

Im Falle des eigenständigen Ermittelns von Maßnahmen zum Beheben der Störung ist es möglich, dass die Steuereinrichtung aufgrund der Abarbeitung des Maschinencodes die ermittelten Maßnahmen direkt ausführt. Je nach Lage des Einzelfalls - beispielsweise der Art der Störung und/oder der Art der ermittelten Maßnahme - kann dies alternativ mit oder ohne vorherige Bestätigung der Maßnahme durch die Bedienperson erfolgen.

Die Aufgabe wird weiterhin durch ein Computerprogramm mit den Merkmalen des Anspruchs 10 gelöst. Erfindungsgemäß bewirkt die Abarbeitung des Maschinencodes durch die Steuereinrichtung, dass die Steuereinrichtung ein erfindungsgemäßes Betriebsverfahren ausführt.

Die Aufgabe wird weiterhin durch eine Steuereinrichtung mit den Merkmalen des Anspruchs 11 gelöst. Erfindungsgemäß ist die Steuereinrichtung mit einem erfindungsgemäßen Computerprogramm programmiert, so dass die Abarbeitung des Maschinencodes durch die Steuereinrichtung bewirkt, dass die Steuereinrichtung ein erfindungsgemäßes Betriebsverfahren ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine vernetzte industrielle technische Anlage,
- FIG 2: ein Ablaufdiagramm,
- FIG 3: eine mögliche Antwort und
- FIG 4 bis 9: Ablaufdiagramme.

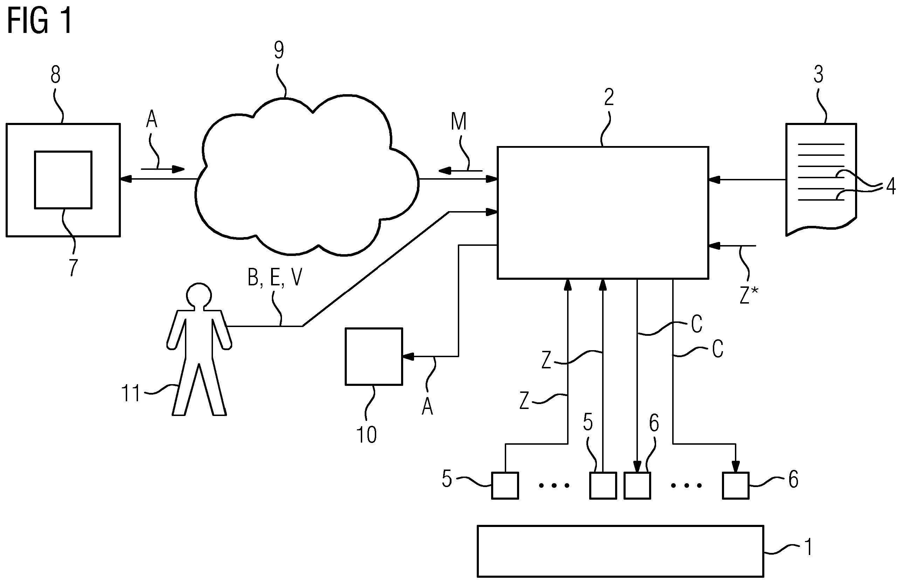

Gemäß FIG 1 wird eine industrielle technische Anlage 1 von einer Steuereinrichtung 2 gesteuert. Bei der industriellen technischen Anlage 1 kann es sich um eine größere Anlage handeln, beispielsweise eine Anlage der Papierindustrie, der Chemieindustrie oder der Grundstoffindustrie, insbesondere ein Walzwerk. Alternativ kann es sich bei der industriellen technischen Anlage 1 um eine mittlere Anlage handeln, beispielsweise eine Werkzeugmaschine oder eine Spritzgießmaschine. Wiederum alternativ kann es sich bei der industriellen technischen Anlage 1 um eine kleinere Anlage handeln, beispielsweise einen einzelnen Antrieb einer größeren Maschine oder Anlage.

Die Steuereinrichtung 2 ist in aller Regel eine softwareprogrammierbare Steuereinrichtung. Sie ist daher mit einem Computerprogramm 3 programmiert. Das Computerprogramm 3 umfasst Maschinencode 4, der von der Steuereinrichtung 2 abarbeitbar ist. Die Abarbeitung des Maschinencodes 4 durch die Steuereinrichtung 2 bewirkt, dass die Steuereinrichtung 2 ein Betriebsverfahren ausführt, das nachstehend in Verbindung mit den weiteren FIG näher erläutert wird.

Zur Steuerung der Anlage 1 nimmt die Steuereinrichtung 2 im Rahmen des Betriebsverfahrens in einem Normalbetrieb in einem Schritt S1 von Sensoren 5 der Anlage 1 (im Falle eines Antriebs beispielsweise von einem Lagesensor) Istgrößen Z entgegen. Rein beispielhaft wird nachfolgend angenommen, dass insgesamt 10 Istgrößen Z erfasst werden. Es ist selbstverständlich aber auch eine Erfassung einer anderen Anzahl von Istgrößen Z möglich. Die Istgrößen Z werden nachfolgend mit Z0 bis Z9 bezeichnet, sofern zwischen verschiedenen Istgrößen Z unterschieden werden soll. Wenn hingegen auf die Istgrößen Z allgemein Bezug genommen wird, wird nur das Bezugszeichen Z verwendet.

In einem Schritt S2 speichert die Steuereinrichtung 2 zumindest für einen begrenzten Zeitraum eine Historie zumindest eines Teils der Istgrößen Z. Beispielsweise können für die Istgrößen Z1, Z2, Z7 und Z8 die Historien gespeichert werden, während dies bei den Istgrößen Z0, Z3 bis Z6 und Z9 nicht erfolgt. Im Ergebnis füllt die Steuereinrichtung 2 somit für jede Istgröße Z, deren Historie sie speichert, nach und nach einen Pufferspeicher, in dem n zeitlich aufeinanderfolgende Werte der jeweiligen Istgröße Z abgespeichert werden. Wenn der Pufferspeicher voll ist, wird der jeweils älteste Wert der jeweiligen Istgröße Z verdrängt. Die Anzahl n an Werten definiert in Verbindung mit einer Zykluszeit, mit die Schritte S1 und S2 sowie weitere Schritte S3 bis S5 wiederholt werden, den begrenzten Zeitraum.

Im Schritt S3 überwacht die Steuereinrichtung 3 die Istgrößen Z auf Auftreten einer Störung. Beispielsweise kann die Steuereinrichtung 3 zu diesem Zweck eine oder mehrere der erfassten Istgrößen Z oder aus den Istgrößen Z abgeleitete Größen mit Grenzwerten vergleichen und je nach Überschreiten oder Unterschreiten des jeweiligen Grenzwerts auf Störung oder keine Störung erkennen.

Wenn die Steuereinrichtung 2 im Schritt S3 keine Störung erkennt, geht die Steuereinrichtung 2 zum Schritt S4 über. Im Schritt S4 ermittelt die Steuereinrichtung 2 Steuergrößen C für Aktoren 6 der Anlage 1 (im Falle eines Antriebs beispielsweise einen Sollstrom oder Ansteuerzustände für einen Stromrichter). Im Rahmen der Ermittlung der Steuergrößen C verwertet die Steuereinrichtung 2 zumindest die Istgrößen Z der Anlage 1 und korrespondierende Sollgrößen Z*. In manchen Fällen verwertet die Steuereinrichtung 2 zusätzlich interne variable Größen (beispielsweise Zustände von Timern und Merkern) und/oder interne, im Normalbetrieb konstante Parameter (beispielsweise die Einstellungen von Reglern). Rein beispielhaft wird nachfolgend angenommen, dass insgesamt 10 Sollgrößen Z* vorgegeben werden. Es ist selbstverständlich aber auch eine andere Anzahl von Sollgrößen Z* möglich. Die Sollgrößen Z* werden nachfolgend mit Z0* bis Z9* bezeichnet, sofern zwischen verschiedenen Sollgrößen Z* unterschieden werden soll. Wenn hingegen auf die Sollgrößen Z* allgemein Bezug genommen wird, wird nur das Bezugszeichen Z* verwendet. Analoge Ausführungen gelten für die Steuergrößen C.

Im Schritt S5 gibt die Steuereinrichtung 2 die ermittelten Steuergrößen C an die Aktoren 6 aus. Sodann geht die Steuereinrichtung 2 zum Schritt S1 zurück.

Die Steuereinrichtung 2 führt somit die Schritte S1 bis S5 zyklisch aus, solange keine Störung vorliegt. Die Zykluszeit, mit der die Abfolge der Schritte S1 bis S5 wiederholt wird, liegt in der Regel im niedrigen Millisekundenbereich, in manchen Fällen auch darunter. In manchen Fällen - insbesondere bei Antrieben - ist sogar eine Zykluszeit von unter 100 µs möglich.

Wenn die Steuereinrichtung 2 im Schritt S3 hingegen eine Störung erkennt, geht die Steuereinrichtung 2 zu einem Schritt S6 über. Im Schritt S6 ermittelt die Steuereinrichtung 2, welche Störung aufgetreten ist, und selektiert eine diese Störung identifizierende Störungsmeldung M. Weiterhin ordnet sie der Störungsmeldung M im Schritt S6 zumindest für einen Teil der Istgrößen Z, deren Historie sie speichert, deren jeweilige Historie zu. Wenn entsprechend obigen Beispiel die Historien für die Istgrößen Z1, Z2, Z7 und Z8 erfasst werden, kann die Steuereinrichtung 2 der Störungsmeldung M beispielsweise die Historien für die Istgrößen Z1 und Z7 zuordnen, während sie der Störungsmeldung M die Historien für die Istgrößen Z2 und Z8 nicht zuordnet.

In einem Schritt S7 übermittelt die Steuereinrichtung 2 sodann die Störungsmeldung M und die der Störungsmeldung M zugeordneten Historien an eine automatisiert betriebene Wissensbasis 7. Es ist möglich, dass die Wissensbasis 7 innerhalb der Steuereinrichtung 2 selbst gespeichert ist. In der Regel ist die Wissensbasis 7 jedoch entsprechend der Darstellung in FIG 1 in einem Rechner 8 gespeichert. Der Rechner 8 ist in diesem Fall eine von der Steuereinrichtung 2 verschiedene Einrichtung. Er ist mit der Steuereinrichtung 2 über ein Rechnernetz 9 - beispielsweise das Internet oder ein LAN - verbunden. Der Rechner 8 kann beispielsweise Cloud-basiert sein.

In der Wissensbasis 7 erfolgt eine automatisierte Analyse und Auswertung der aufgetretenen Störung. Die Wissensbasis 7 wertet zu diesem Zweck insbesondere die Historien der übermittelten Istgrößen Z aus. Beispielsweise können die übermittelten Historien in Verbindung mit der Störungsmeldung M oder ohne Verbindung zu ihr gespeichert, miteinander verknüpft und auch analysiert werden. Weiterhin können auch vergleichbare Sachverhalte ausgewertet werden, die bei vergleichbaren Steuereinrichtungen 2 und/oder vergleichbaren Anlagen 1 aufgetreten sind.

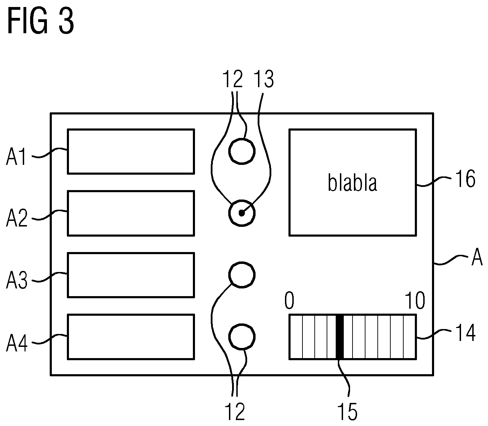

Sodann übermittelt die Wissensbasis 7 in Reaktion auf die übermittelte Störungsmeldung M eine entsprechende Antwort A an die Steuereinrichtung 2. Diese nimmt die Antwort A in einem Schritt S8 entgegen. In einem Schritt S9 gibt die Steuereinrichtung 2 die Antwort A über eine Anzeigeeinrichtung 10 (siehe FIG 1) an eine Bedienperson 11 (siehe ebenfalls FIG 1) der Steuereinrichtung 2 aus. Die Antwort A kann nach Bedarf ausgestaltet sein. Beispielsweise kann die Antwort A entsprechend der Darstellung in FIG 3 eine oder mehrere Teilantworten A1 bis A4 umfassen.

In einem Schritt S10 prüft die Steuereinrichtung 2, ob die aufgetretene und gemeldete Störung kritischer Natur ist. Wenn dies nicht der Fall ist, geht die Steuereinrichtung 2 zum Schritt S4 über. In diesem Fall setzt die Steuereinrichtung die Ausführung der Schritte S1 bis S5 also fort. Sie behält damit trotz der Störung den Normalbetrieb bei. Wenn die Steuereinrichtung 2 im Schritt S10 hingegen eine kritische Störung erkennt, geht sie zu einem Schritt S11 über. Im Schritt S11 beendet die Steuereinrichtung 2 den Normalbetrieb. Sie nimmt den Normalbetrieb erst wieder auf, wenn die Bedienperson 11 der Steuereinrichtung 2 in einem Schritt S12 einen Befehl zur Wiederaufnahme des Normalbetriebs vorgibt.

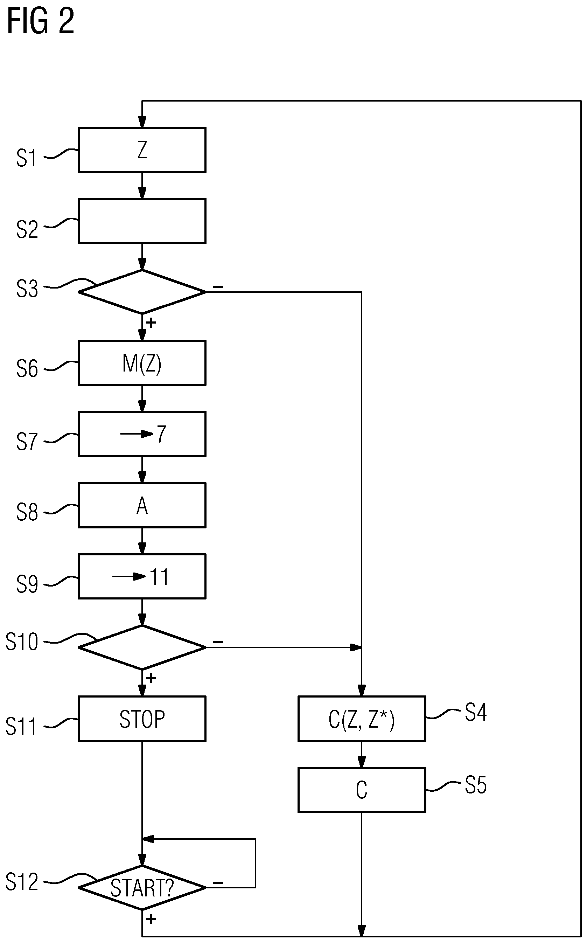

Genau genommen ist die Darstellung gemäß FIG 2 nicht völlig korrekt. Denn genau genommen folgt der Schritt S10 unmittelbar auf den Schritt S3. Die Schritte S6 bis S9 werden hingegen im Falle einer Störung entweder parallel zu den Schritten S1 bis S5 ausgeführt oder sind dem Schritt S11 nachgeordnet. Die Darstellung gemäß FIG 2 führt jedoch zu einer verständlicheren Darstellung.

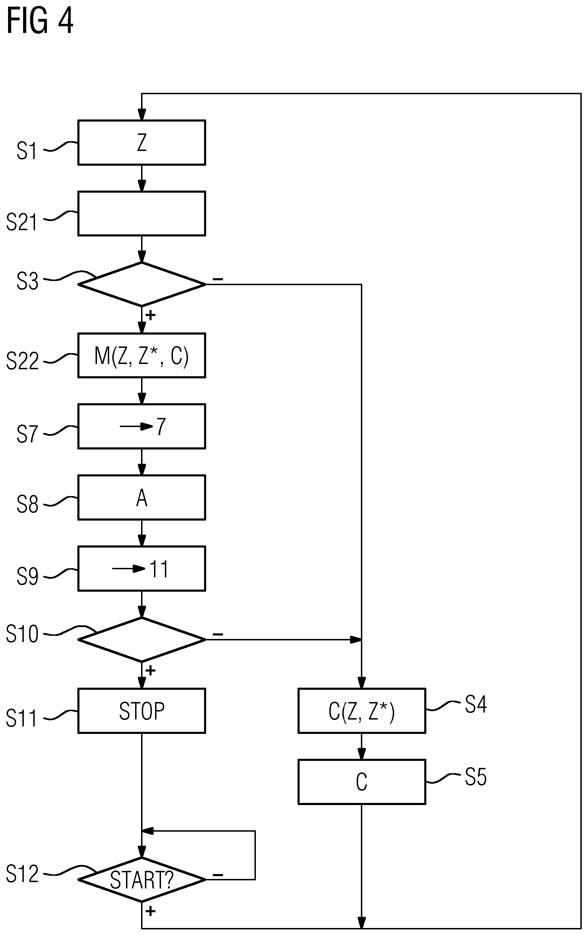

Erfindungsgemäß sind entsprechend der Darstellung in FIG 4 der Schritt S2 durch einen Schritt S21 und der Schritt S6 durch einen Schritt S22 ersetzt.

So kann die Steuereinrichtung 2 im Schritt S21 für den begrenzten Zeitraum zusätzlich auch für zumindest einen Teil der Sollgrößen Z* und/oder einen Teil der Steuergrößen C eine entsprechende Historie abspeichern. Beispielsweise kann die Steuereinrichtung im Schritt S21 zusätzlich für die Sollgrößen Z0*, Z1* und Z8* und/oder die Steuergrößen C3, C5 und C7 jeweils deren Historie speichern. Hiermit korrespondierend kann die Steuereinrichtung 2 der Störungsmeldung M im Schritt S22 nicht nur für zumindest einen Teil der Istgrößen Z, sondern auch für zumindest einen Teil der Sollgrößen Z* und/oder zumindest einen Teil der Steuergrößen C eine jeweils erfasste Historie zuordnen. Wenn entsprechend obigen Beispiel - zusätzlich zu den Historien für die Istgrößen Z - auch für die Sollgrößen Z0*, Z1* und Z8* und/oder die Steuergrößen C3, C5 und C7 jeweils deren Historie gespeichert wird, kann die Steuereinrichtung 2 der Störungsmeldung M im Schritt S22 beispielsweise - zusätzlich zu den Historien für die Istgrößen Z1 und Z7 - die Historie für die Sollgrößen Z0* und Z8* und/oder die Historie für die Steuergröße C3 zuordnen. In jedem Fall werden zusammen mit der Störungsmeldung M die zugeordneten Historien mit an die Wissensbasis 7 übermittelt.

Dies gilt unabhängig davon, ob es sich um Historien für Istgrößen Z, Sollgrößen Z* oder Steuergrößen C handelt.

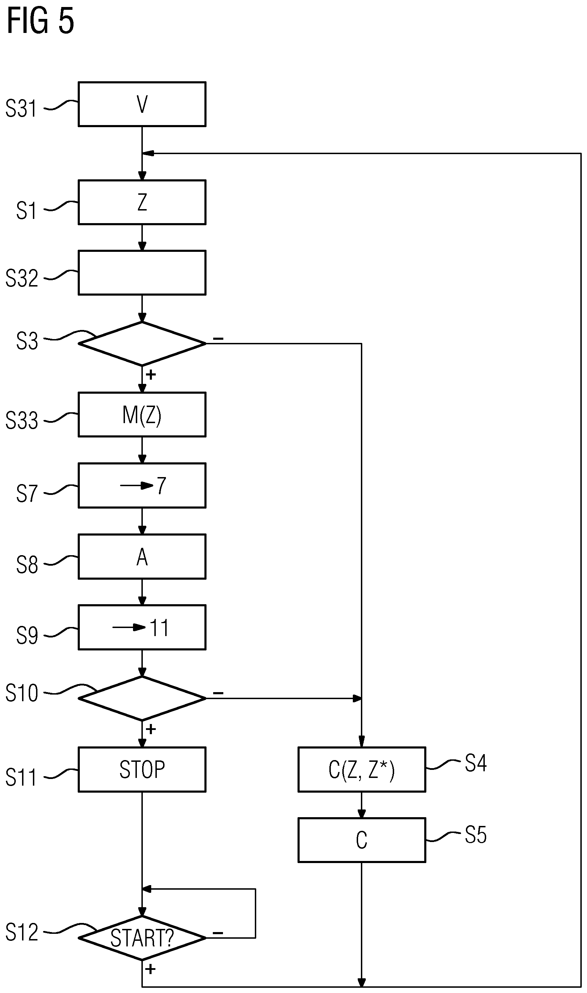

Weiterhin ist erfindungsgemäß und entsprechend der Darstellung in FIG 5 ein zusätzlicher Schritt S31 vorhanden und sind zusätzlich die Schritte S2 und S6 durch Schritte S32 und S33 ersetzt. Somit nimmt die Steuereinrichtung im Schritt S31 von der Bedienperson 11 Vorgaben V entgegen. Die Vorgaben V legen fest, welche Historien im Schritt S32 gespeichert werden. Alternativ oder zusätzlich legen die Vorgaben V fest, welche Historien der Störungsmeldung M im Falle einer Störung im Schritt S33 zugeordnet werden. Die Steuereinrichtung 2 bestimmt also in Abhängigkeit von den Vorgaben V, welche Historien sie ermittelt und/oder welche Historien sie beim Auftreten einer Störung an die Wissensbasis 7 übermittelt. Die Vorgehensweise von FIG 5 ist nach Bedarf mit der Vorgehensweise von FIG 4 kombinierbar oder unabhängig von ihr realisierbar.

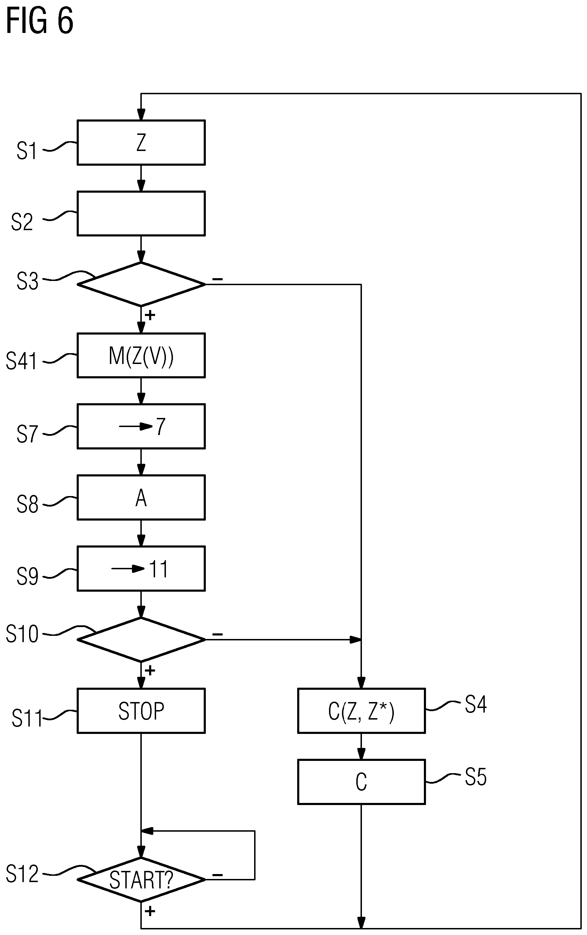

Weiterhin ist entsprechend der Darstellung in FIG 6 der Schritt S6 durch einen Schritt S41 ersetzt. Die Steuereinrichtung 2 bestimmt in Abhängigkeit von der aufgetretenen Störung, welche Historien sie an die Wissensbasis 7 übermittelt.

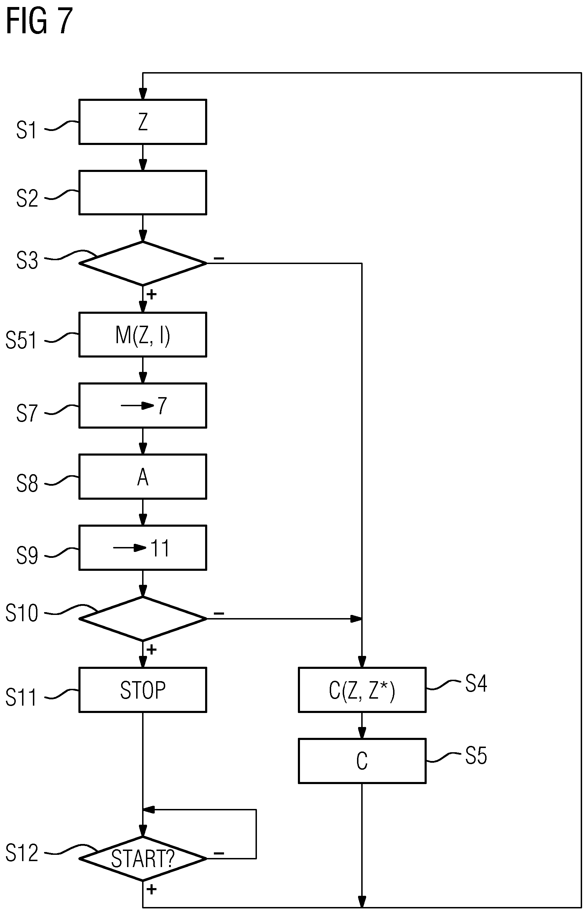

Weiterhin ist es entsprechend der Darstellung in FIG 7 möglich, dass der Schritt S6 durch einen Schritt S51 ersetzt ist. In diesem Fall ordnet die Steuereinrichtung 2 der Störungsmeldung M weitere Informationen I zu. Auch die Informationen I werden zusammen mit der Störungsmeldung M als solcher im Schritt S7 an die Wissensbasis 7 übermittelt. Die Vorgehensweise von FIG 7 ist ebenfalls nach Bedarf mit der Vorgehensweise einer oder mehrerer der FIG 4 bis 6 kombinierbar oder unabhängig von ihnen realisierbar.

Die zusätzlichen Informationen I können nach Bedarf bestimmt sein. Beispielsweise kann es sich bei den zusätzlichen Informationen I um mindestens eine der folgenden Angaben handeln:
- Identifizierungsdaten zur eindeutigen Identifizierung der Steuereinrichtung 2 und/oder der Anlage 1. Hierbei kann je nach Bedarf eine Identifizierung des jeweiligen Typs (beispielsweise "Antrieb vom Typ XYZ") oder eine Identifizierung der individuellen Steuereinrichtung 2 bzw. der individuellen Anlage 1 (beispielsweise "Antrieb 4 der Maschine XY, die am 04. Dezember 2015 an die Firma Müller geliefert wurde") erfolgen.
- Informationen über die Hardware der Steuereinrichtung 2 und/oder der Anlage 1. Die Angaben können beispielsweise Bestellnummern, Versionsnummern usw. umfassen.
- Informationen über die Firmware der Steuereinrichtung 2 und/oder der Anlage 1. Beispielsweise können Informationen darüber geliefert werden, welche Firmware-Module überhaupt installiert sind oder genutzt werden sowie welche Version bestimmter Firmware-Module oder der Firmware insgesamt genutzt wird.
- Informationen über die Software der Steuereinrichtung 2. Auch hier können - analog zur Information über die Firmware der Steuereinrichtung 2 - Informationen darüber geliefert werden, welche Software-Module überhaupt installiert sind oder genutzt werden sowie welche Version bestimmter Software-Module oder der Software insgesamt genutzt wird.
- Kommunikationseinstellungen der Steuereinrichtung 2, beispielsweise deren Vernetzung mit anderen Steuereinrichtungen und/oder übergeordneten Rechnern und dergleichen mehr.
- Einstellungen von Steuerungsparametern der Steuereinrichtung 2, beispielsweise Parametrierungen von Reglern.
- Informationen über den Zustand der Umgebung der Steuereinrichtung 2 und/oder der Anlage 1, beispielsweise Temperatur und/oder Luftfeuchtigkeit.
- Informationen über an Elementen der Anlage 1 aufgetretenen Verschleiß. Dies kann - rein beispielhaft - bei einem elektrischen Antrieb mit Kohlebürsten der aufgelaufene Verschleiß der Kohlebürsten sein, bei einem elektromechanischen Schalter (Schütz) oder einem elektronischen Schalter (IGBT, MOSFET) die Zahl der Schaltspiele.
- Eine Konfiguration der Anlage 1, beispielsweise an welcher Stelle einer größeren Maschine ein bestimmter Antrieb eingesetzt wird.

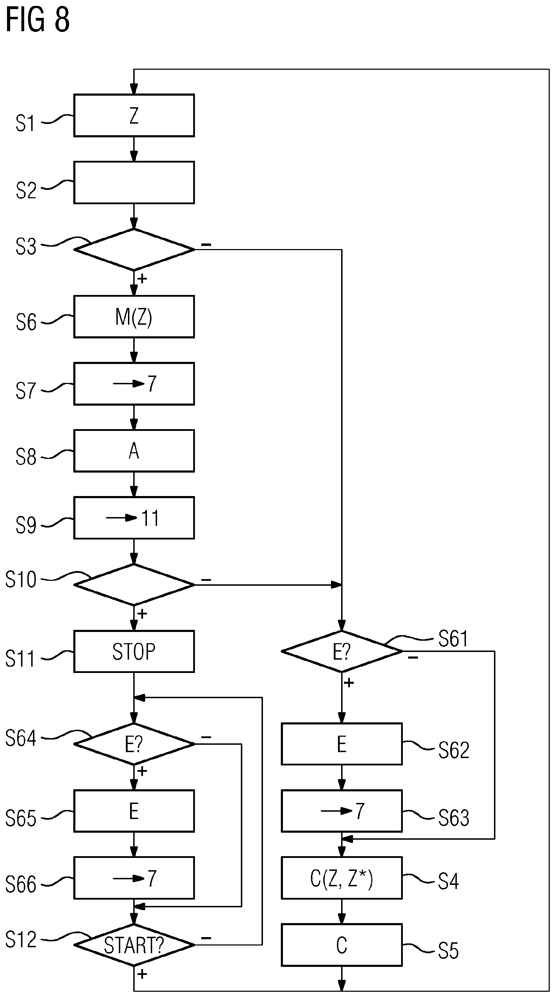

Weiterhin ist es entsprechend der Darstellung in FIG 8 möglich, dass zusätzliche Schritte S61 bis S66 vorhanden sind. Im Schritt S61 prüft die Steuereinrichtung 2, ob die Bedienperson 11 ihr Ergänzungsinformationen E vorgibt. Wenn dies der Fall ist, nimmt die Steuereinrichtung 2 die Ergänzungsinformationen E im Schritt S62 entgegen. Im Schritt S63 leitet die Steuereinrichtung 2 die Ergänzungsinformationen E an die Wissensbasis 7 weiter. Da die Steuereinrichtung 2 die Schritte S61 bis S63 im NEIN-Zweig des Schrittes S10 und damit nach den Schritten S8 und S9 ausführt, werden diese Schritte von der Steuereinrichtung 2 in Reaktion auf die Antwort A ausgeführt. Die Schritte S64 bis S66 korrespondieren mit den Schritten S61 bis S63. Sie werden jedoch im JA-Zweig des Schrittes S10 ausgeführt. Die Vorgehensweise von FIG 8 ist ebenfalls nach Bedarf mit der Vorgehensweise einer oder mehrerer der FIG 4 bis 7 kombinierbar oder unabhängig von ihnen realisierbar.

Genau genommen ist auch die Darstellung gemäß FIG 8 nicht völlig korrekt. Denn genau genommen werden Schritte S61 bis S63 - analog zu den Schritten S6 bis S9 - parallel zu den Schritten S1 bis S5 ausgeführt. Bei den Schritten S64 bis S66 ist es ebenfalls möglich, sie im Hintergrund auszuführen.

Die Ergänzungsinformationen E können beispielsweise, wie in der Darstellung in FIG 3 durch vier Kreise 12 angedeutet ist, von denen nur einer mit einem Punkt 13 gefüllt ist, eine Auswahl einer der Teilantworten A1 bis A4 enthalten. Alternativ oder zusätzlich können die Ergänzungsinformationen E beispielsweise, wie in der Darstellung in FIG 3 durch ein Bewertungsfeld 14 mit einer bewegbaren Markierung 15 angedeutet ist, eine Bewertung der Antwort A enthalten. Alternativ oder zusätzlich kann die Antwort A auch ein Textfeld 16 enthalten, in welches die Bedienperson 11 Freitext eintragen kann.

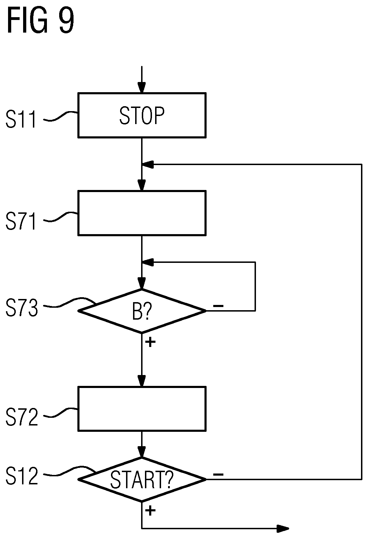

In denjenigen Fällen, in denen aufgrund der Störung der Normalbetrieb beendet wird, ist es entsprechend der Darstellung in FIG 9 weiterhin möglich, dass sich an den Schritt S11 Schritte S71 und S72 anschließen. Im Schritt S71 ermittelt die Steuereinrichtung 2 anhand der Antwort A selbsttätig Maßnahmen zum Beheben der Störung. Im Schritt S72 führt die Steuereinrichtung 2 die im Schritt S71 ermittelten Maßnahmen aus. Soweit erforderlich kann zusätzlich vor der Ausführung der ermittelten Maßnahmen in einem Schritt S73 von der Bedienperson 11 eine Bestätigung B abgefragt werden. Wenn dies der Fall ist, führt die Steuereinrichtung 2 den Schritt S72 erst nach Vorgabe der Bestätigung B aus. Die Vorgehensweise von FIG 9 ist ebenfalls nach Bedarf mit der Vorgehensweise einer oder mehrerer der FIG 4 bis 8 kombinierbar oder unabhängig von ihnen realisierbar.

Die vorliegende Erfindung weist viele Vorteile auf. Insbesondere können der Bedienperson 11 oftmals erheblich bessere Hinweise zur Behebung von Störungen gegeben werden als im Stand der Technik. Stillstandszeiten können dadurch reduziert werden. Weiterhin ist es möglich, geringer qualifiziertes Personal einzusetzen. Durch die Auswertung in einer zentralen Wissensbasis 7 kann weiterhin die Wissensbasis 7 nach und nach immer weiter erweitert werden. Gegebenenfalls kann es auch möglich sein, der Bedienperson 11 bereits im Vorfeld von Störungen Hinweise zu geben, mittels derer die Störung vermieden werden kann. Durch die Ergänzungsinformationen E kann eine noch weitergehende Optimierung der Wissensbasis 7 erfolgen. Durch die Analyse der gesammelten Daten können in der Wissensbasis 7 insbesondere auch systematische Fehler erkannt werden, die dann bei späteren Produktverbesserungen berücksichtigt werden können. Weiterhin ist es möglich, in der zentralen Wissensbasis 7 alle Störungen und deren Behebung zu protokollieren, so dass auf einfache Weise eine Historie der Steuereinrichtung 2 bzw. der Anlage 1 erstellt werden kann. Die Kommunikation zwischen der Steuereinrichtung 2 und dem Rechner 8 kann nach Bedarf anonym oder identifiziert sowie verschlüsselt oder unverschlüsselt erfolgen. Es ist auch möglich, dass eine Kommunikation in einer oder in beiden Richtungen nur nach einer vorherigen Authentifizierung und Autorisierung erfolgt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine Steuereinrichtung (2) zur Steuerung einer industriellen technischen Anlage (1), wobei die Steuereinrichtung Maschinencode (4) eines Computerprogramms (3) abarbeitet, wobei die Abarbeitung des Maschinencodes (4) durch die Steuereinrichtung (2) bewirkt, dass die Steuereinrichtung (2)
- in einem Normalbetrieb zyklisch von Sensoren (5) der Anlage (1) Istgrößen (Z) der Anlage (1) entgegennimmt, unter Verwertung der Istgrößen (Z) der Anlage (1) und von Sollgrößen (Z*) der Anlage (1) Steuergrößen (C) für Aktoren (6) der Anlage (1) ermittelt und die Steuergrößen (C) an die Aktoren (6) ausgibt,
- im Normalbetrieb zumindest für einen begrenzten Zeitraum zumindest für einen Teil der Istgrößen (Z) deren jeweilige Historie speichert,
- im Normalbetrieb die Istgrößen (Z) auf Auftreten einer Störung überwacht,
- beim Auftreten einer Störung eine die Störung identifizierende Störungsmeldung (M) und zumindest für einen Teil der Istgrößen (Z), deren jeweilige Historie die Steuereinrichtung (2) speichert, die jeweilige Historie an eine automatisiert betriebene Wissensbasis (7) übermittelt,
- in Reaktion auf die Übermittlung der Störungsmeldung (M) und der übermittelten Historien von der Wissensbasis (7) eine Antwort (A) entgegennimmt,
- die Antwort (A) über eine Anzeigeeinrichtung (10) an eine Bedienperson (11) der Steuereinrichtung (2) ausgibt,
- vor der Ausführung des Normalbetriebs von der Bedienperson (11) Vorgaben (V) entgegennimmt und dass die Steuereinrichtung (2) in Abhängigkeit von den Vorgaben (V) bestimmt, welche Historien sie ermittelt,
**dadurch gekennzeichnet ,**
**dass** die Abarbeitung des Maschinencodes (4) durch die Steuereinrichtung (2) bewirkt, dass die Steuereinrichtung (2)
- in Abhängigkeit von der aufgetretenen Störung bestimmt, welche Historien sie an die Wissensbasis (7) übermittelt,
- im Normalbetrieb für den begrenzten Zeitraum zusätzlich zu den Historien für zumindest einen Teil der Istgrößen (Z) auch für zumindest einen Teil der Sollgrößen (Z*) und/oder für zumindest einen Teil der Steuergrößen (C) eine jeweilige Historie speichert und
- beim Auftreten der Störung zusätzlich zur Störungsmeldung (M) und zu den übermittelten Historien der Istgrößen (Z) auch zumindest für einen Teil der Sollgrößen (Z*) und/oder Steuergrößen (C), deren jeweilige Historie die Steuereinrichtung (2) speichert, die jeweilige Historie an die Wissensbasis (7) übermittelt.

2. Betriebsverfahren nach Anspruch 1,
**dadurch gekennzeichnet ,**
**dass** die Abarbeitung des Maschinencodes (4) durch die Steuereinrichtung (2) bewirkt, dass die Steuereinrichtung (2) beim Auftreten einer Störung zusätzlich zur Störungsmeldung (M) und den übermittelten Historien weitere Informationen (I) an die Wissensbasis (7) übermittelt.

3. Betriebsverfahren nach Anspruch 2,
**dadurch gekennzeichnet ,**
**dass** die weiteren Informationen (I) mindestens einen der nachfolgenden Sachverhalte umfassen:
- Identifizierungsdaten zur eindeutigen Identifizierung der Steuereinrichtung (2) und/oder der Anlage (1),
- Informationen über die Hardware der Steuereinrichtung (2) und/oder der Anlage (1),
- Informationen über die Firmware der Steuereinrichtung (2) und/oder der Anlage (1),
- Informationen über die Software der Steuereinrichtung (2),
- Kommunikationseinstellungen der Steuereinrichtung (2),
- Einstellungen von Steuerungsparametern der Steuereinrichtung (2),
- Informationen über den Zustand der Umgebung der Steuereinrichtung (2) und/oder der Anlage (1),
- Informationen über an Elementen der Anlage (1) aufgetretenen Verschleiß,
- eine Konfiguration der Anlage (1).

4. Betriebsverfahren nach einem der obigen Ansprüche,
**dadurch gekennzeichnet ,**
**dass** die Abarbeitung des Maschinencodes (4) durch die Steuereinrichtung (2) bewirkt, dass die Steuereinrichtung (2) in Reaktion auf die über die Anzeigeeinrichtung (10) an die Bedienperson (11) ausgegebene Antwort (A) von der Bedienperson (11) Ergänzungsinformationen (E) entgegennimmt und die Ergänzungsinformationen (E) an die Wissensbasis (7) weiterleitet.

5. Betriebsverfahren nach Anspruch 4,
**dadurch gekennzeichnet ,**
**dass** die Ergänzungsinformationen (E) eine Auswahl einer von mehreren in der Antwort (A) enthaltenen Teilantworten (A1 bis A4), eine Bewertung der Antwort (A) und/oder Freitext enthalten.

6. Betriebsverfahren nach einem der Ansprüche 1 bis 5,
**dadurch gekennzeichnet ,**
**dass** die Abarbeitung des Maschinencodes (4) durch die Steuereinrichtung (2) bewirkt, dass die Steuereinrichtung (2) den Normalbetrieb, in dem sie zyklisch von den Sensoren (5) der Anlage (1) die Istgrößen (Z) der Anlage (1) entgegennimmt, unter Verwertung der Istgrößen (Z) der Anlage (1) und der Sollgrößen (Z*) der Anlage (1) die Steuergrößen (C) für die Aktoren (6) der Anlage (1) ermittelt und die Steuergrößen (C) an die Aktoren (6) ausgibt, entweder trotz der Störung beibehält oder aufgrund der Störung beendet.

7. Betriebsverfahren nach einem der obigen Ansprüche,
**dadurch gekennzeichnet ,**
**dass** die Wissensbasis (7) innerhalb der Steuereinrichtung (2) gespeichert ist oder in einem von der Steuereinrichtung (2) verschiedenen Rechner (8) gespeichert ist, der über ein Rechnernetz (9) mit der Steuereinrichtung (2) verbunden ist.

8. Betriebsverfahren nach einem der obigen Ansprüche,
**dadurch gekennzeichnet ,**
**dass** die Abarbeitung des Maschinencodes (4) durch die Steuereinrichtung (2) bewirkt, dass die Steuereinrichtung (2) anhand der Antwort (A) selbsttätig Maßnahmen zum Beheben der Störung ermittelt.

9. Betriebsverfahren nach Anspruch 8,
**dadurch gekennzeichnet ,**
**dass** die Abarbeitung des Maschinencodes (4) durch die Steuereinrichtung (2) bewirkt, dass die Steuereinrichtung (2) die ermittelten Maßnahmen mit oder ohne vorherige Bestätigung durch die Bedienperson (11) ausführt.

10. Computerprogramm für eine Steuereinrichtung (2) zur Durchführung eines Betriebsverfahrens nach einem der obigen Ansprüche.

11. Steuereinrichtung für eine industrielle technische Anlage (1), wobei die Steuereinrichtung mit einem Computerprogramm (3) nach Anspruch 10 programmiert ist, so dass die Steuereinrichtung ein Betriebsverfahren nach einem der Ansprüche 1 bis 9 ausführt.

## Claims

1. Operating method for a control device (2) for controlling an industrial technical installation (1), wherein the control device processes machine code (4) of a computer program (3), wherein the processing of the machine code (4) by the control device (2) causes the control device (2),
- in normal operation, to receive actual variables (Z) of the installation (1) from sensors (5) of the installation (1) in a cyclical manner, utilise the actual variables (Z) of the installation (1) and target variables (Z*) of the installation (1) to ascertain control variables (C) for actuators (6) of the installation (1) and output the control variables (C) to the actuators (6),
- in normal operation, at least for some of the actual variables (Z), to store the respective history thereof at least for a limited period of time,
- in normal operation, to monitor the actual variables (Z) for the occurrence of a fault,
- on occurrence of a fault, to transmit a fault message (M) which identifies the fault and, at least for some of the actual variables (Z), whose respective history is stored by the control device (2), the respective history to a knowledge base (7) operated on an automated basis,
- as a reaction to the transmission of the fault message (M) and the transmitted histories, to receive a response (A) from the knowledge base (7),
- to output the response (A) to an operator (11) of the control device (2) via a display device (10),
- before carrying out the normal operation, to receive specifications (V) from the operator (11) and the control device (2), as a function of the specifications (V), to determine which histories it ascertains,
**characterised in that**
the processing of the machine code (4) by the control device (2) causes the control device (2)
- to determine, as a function of the fault which has occurred, which histories it transmits to the knowledge base (7),
- in normal operation, for the limited period of time, in addition to the histories for at least some of the actual variables (Z), to also store a respective history for at least some of the target variables (Z*) and/or for at least some of the control variables (C) and
- on occurrence of the fault, in addition to the fault message (M) and the transmitted histories of the actual variables (Z), to also transmit the respective history to the knowledge base (7) at least for some of the target variables (Z*) and/or control variables (C), whose respective history is stored by the control device (2).

2. Operating method according to claim 1,
**characterised in that**
the processing of the machine code (4) by the control device (2) causes the control device (2), on occurrence of a fault, in addition to the fault message (M) and the transmitted histories, to transmit further information (I) to the knowledge base (7).

3. Operating method according to claim 2,
**characterised in that**
the further information (I) comprises at least one of the following matters:
- identification data for uniquely identifying the control device (2) and/or the installation (1),
- information regarding the hardware of the control device (2) and/or the installation (1),
- information regarding the firmware of the control device (2) and/or the installation (1),
- information regarding the software of the control device (2),
- communication settings of the control device (2),
- settings of control parameters of the control device (2),
- information regarding the status of the environment of the control device (2) and/or the installation (1),
- information regarding wear to elements of the installation (1) which has occurred,
- a configuration of the installation (1).

4. Operating method according to one of the above claims,
**characterised in that**
the processing of the machine code (4) by the control device (2) causes the control device (2), as a reaction to the response (A) output to the operator (11) via the display device (10), to receive supplementary information (E) from the operator (11) and the control device (2) forwards the supplementary information (E) to the knowledge base (7).

5. Operating method according to claim 4,
**characterised in that**
the supplementary information (E) contains a selection of one of a plurality of partial responses (A1 to A4) contained in the response (A), an assessment of the response (A) and/or free text.

6. Operating method according to one of claims 1 to 5,
**characterised in that**
the processing of the machine code (4) by the control device (2) causes the control device (2) either to maintain normal operation despite the fault, or to terminate normal operation due to the fault, during which normal operation it receives the actual variables (Z) of the installation (1) from the sensors (5) of the installation (1) in a cyclical manner, utilises the actual variables (Z) of the installation (1) and the target variables (Z*) of the installation (1) to ascertain the control variables (C) for the actuators (6) of the installation (1) and outputs the control variables (C) to the actuators (6).

7. Operating method according to one of the above claims,
**characterised in that**
the knowledge base (7) is stored within the control device (2) or is stored in a computer (8) which is different from the control device (2), which is connected to the control device (2) via a computer network (9).

8. Operating method according to one of the above claims,
**characterised in that**
the processing of the machine code (4) by the control device (2) causes the control device (2) to autonomously ascertain measures for rectifying the fault on the basis of the response (A).

9. Operating method according to claim 8,
**characterised in that**
the processing of the machine code (4) by the control device (2) causes the control device (2) to carry out the ascertained measures with or without prior confirmation by the operator (11) .

10. Computer program for a control device (2) for performing an operating method according to one of the above claims.

11. Control device (2) for an industrial technical installation (1), wherein the control device is programmed with a computer program (3) according to claim 10, so that the control device carries out an operating method according to one of claims 1 to 9.

## Revendications

1. Procédé pour faire fonctionner un dispositif (2) de commande d'une installation (1) technique industrielle, dans lequel le dispositif de commande élabore un code machine (4) d'un programme (3) d'ordinateur, dans lequel l'élaboration du code machine (4) par le dispositif (2) de commande fait que le dispositif (2) de commande
- dans un fonctionnement normal, reçoit cycliquement, de capteurs (5) de l'installation (1), des grandeurs (Z) réelles, en utilisant des grandeurs (Z) réelles de l'installation (1) et des grandeurs (Z*) de consigne de l'installation (1), détermine des grandeurs (C) de commande d'actionneurs (6) de l'installation (1) et donne les grandeurs (C) de commande aux actionneurs (6),
- en fonctionnement normal, au moins pendant un laps de temps limité, met en mémoire au moins pour une partie des grandeurs (Z) réelles leur historique respectif,
- en fonctionnement normal, surveille l'apparition d'une perturbation dans les grandeurs (Z) réelles,
- s'il apparaît une perturbation, transmet un message (M) de perturbation identifiant la perturbation et, au moins pour une partie des grandeurs (Z) réelles, dont le dispositif (2) de commande met en mémoire leur historique respectif, transmet l'historique respectif à une base (7) de connaissances fonctionnant de manière automatisée,
- reçoit de la base (7) de connaissances une réponse (A) en réaction à la transmission du message (M) de perturbation et des historiques transmis,
- donne, par un dispositif (10) d'affichage, la réponse (A) à une personne (11) de service du dispositif (2) de commande,
- avant l'exécution du fonctionnement normal, reçoit de la personne (11) de service, des règles (V) et en ce que le dispositif (2) de commande détermine, en fonction des règles (V), les historiques qu'il détermine,
**caractérisé**
**en ce que** l'élaboration du code machine (4) par le dispositif (2) de commande fait que le dispositif (2) de commande
- détermine, en fonction de la perturbation apparue, les historiques qu'il transmet à la base (7) de connaissances,
- en fonctionnement normal, pendant le laps de temps limité, met en mémoire un historique respectif supplémentairement aux historiques pour au moins une partie des grandeurs (Z) réelles, également pour au moins une partie des grandeurs (Z*) de consigne et/ou pour au moins une partie des grandeurs (C) de commande et
- à l'apparition de la perturbation, transmet les historiques respectifs à la base (7) de connaissances supplémentairement au message (M) de perturbation et aux historiques transmis des grandeurs (Z) réelles, au moins également pour une partie des grandeurs (Z*) de consigne et/ou des grandeurs (C) de commande, dont le dispositif (2) de commande met en mémoire l'historique respectif.

2. Procédé suivant la revendication 1,
**caractérisé**
**en ce que** l'élaboration du code machine (4) par le dispositif (2) de commande fait que le dispositif (2) de commande transmet, à l'apparition d'une perturbation supplémentairement au message (M) de perturbation et aux historiques transmis, d'autres informations (I) à la base (7) de connaissances.

3. Procédé suivant la revendication 2,
**caractérisé**
**en ce que** les autres informations (I) comprennent au moins l'une de ce qui suit :
- des données d'identification pour l'identification univoque du dispositif (2) de commande et/ou de l'installation (1),
- des informations sur le matériel du dispositif (2) de commande et/ou de l'installation (1),
- des informations sur le logiciel du dispositif (2) de commande et/ou de l'installation (1),
- des informations sur le logiciel du dispositif (2) de commande,
- des réglages de communication du dispositif (2) de commande,
- des réglages de paramètres de commande du dispositif (2) de commande,
- des informations sur l'état de l'environnement du dispositif (2) de commande et/ou de l'installation (1),
- des informations sur l'usure apparue sur des éléments de l'installation (1),
- une configuration de l'installation (1).

4. Procédé suivant l'une des revendications précédentes,
**caractérisé**
**en ce que** l'élaboration du code machine (4) par le dispositif (2) de commande fait que le dispositif (2) de commande reçoit des informations (E) complémentaires de la personne (11) de service en réaction à la réponse (A) donnée à la personne (11) de service par le dispositif (10) d'affichage et achemine les informations (E) complémentaires à la base (7) de connaissances.

5. Procédé suivant la revendication 4,
**caractérisé**
**en ce que** les informations (E) complémentaires comprennent une sélection d'une parmi plusieurs réponses (A1 à A4) partielles contenues dans la réponse (A), une évaluation de la réponse (A) et/ou un texte libre.

6. Procédé suivant l'une des revendications 1 à 5,
**caractérisé**
**en ce que** l'élaboration du code machine (4) par le dispositif (2) de commande fait que le dispositif (2) de commande détermine le fonctionnement normal, dans lequel il reçoit cycliquement, des capteurs (5) de l'installation (1), des grandeurs (Z) réelles de l'installation (1), détermine, en utilisant les grandeurs (Z) réelles de l'installation (1) et les grandeurs (Z*) de consigne de l'installation (1), les grandeurs (C) de commande des actionneurs (6) de l'installation (1) et donne les grandeurs (C) de commande aux actionneurs (6), les conserve malgré la perturbation ou y met fin en raison de la perturbation.

7. Procédé suivant l'une des revendications précédentes,
**caractérisé**
**en ce que** la base (7) de connaissances est mise en mémoire dans le dispositif (2) de commande ou est mise en mémoire dans un ordinateur (8) différent du dispositif (2) de commande, qui est relié par un réseau (9) informatique au dispositif (2) de commande.

8. Dispositif suivant l'une des revendications précédentes,
**caractérisé**
**en ce que** l'élaboration du code machine (4) par le dispositif (2) de commande fait que le dispositif (2) de commande détermine, à l'aide de la réponse (A), automatiquement des mesures pour faire cesser la perturbation.

9. Procédé suivant la revendication 8,
**caractérisé**
**en ce que** l'élaboration du code machine (4) par le dispositif (2) de commande fait que le dispositif (2) de commande exécute les mesures déterminées avec ou sans actionnement préalable par la personne (11) de service.

10. Programme d'ordinateur pour un dispositif (2) de commande afin d'effectuer un procédé suivant l'une des revendications précédentes.

11. Dispositif de commande d'une installation (1) technique industrielle, dans lequel le dispositif de commande est programmé par un programme (3) d'ordinateur suivant la revendication 10, de manière à ce que le dispositif de commande exécute un procédé suivant l'une des revendications 1 à 9.
